# FASCICULE DE BREVET EUROPEEN

(11) **EP 1 568 469 B1**
(45) Date de publication et mention de la délivrance du brevet: **27.04.2011**
(21) Numéro de dépôt: 05290434.9
(22) Date de dépôt: 25.02.2005
(51) Int. Cl.: B29C 65/06, F16L 47/32, B29K 77/00, B29K 105/06, B29L 31/24

(54) **Procédé de piquage d'un corps tubulaire sur un conduit de transfert de fluide, et conduit ainsi piqué**
Verfahren zum Verbinden einer Zweigleitung mit einer Flüssigkeitsübertragungsleitung und abgezweigter Leitung
Method for branching a pipe on a conduit for transfering fluid and branched conduit

(30) Priorité: 25.02.2004 FR 0401883
(43) Date de publication de la demande: 31.08.2005
(73) Titulaire: HUTCHINSON, 75008 Paris (FR)
(72) Inventeur: Tourte, Marc, 45700 Villemandeur (FR); Lemoine, Jean-Philippe, 45200 Amilly (FR)
(74) Mandataire: Bolinches, Michel Jean-Marie

(56) Documents cités:
- WO-A-99/45071
- DE-A- 19 935 424
- US-A- 3 633 599
- US-A- 3 692 614
- US-A- 4 260 094
- US-A- 4 601 927
- US-A- 5 125 431
- US-A- 5 853 831
- PATENT ABSTRACTS OF JAPAN vol. 0133, no. 98 (M-866), 5 septembre 1989 (1989-09-05) -& JP 01 141722 A (KIIPAA KK), 2 juin 1989 (1989-06-02)
- PATENT ABSTRACTS OF JAPAN vol. 0182, no. 83 (M-1613), 30 mai 1994 (1994-05-30) -& JP 06 050490 A (TOYO PLAST SEIKO KK), 22 février 1994 (1994-02-22)
- PATENT ABSTRACTS OF JAPAN vol. 1996, no. 10, 31 octobre 1996 (1996-10-31) -& JP 08 142197 A (TOYOTA MOTOR CORP), 4 juin 1996 (1996-06-04)
- DREGER D R: "WELDING PLASTICS BY VIBRATION" MACHINE DESIGN, PENTON MEDIA, CLEVELAND, OH, US, vol. 46, no. 31, 26 décembre 1974 (1974-12-26), page 42, XP000677071 ISSN: 0024-9114
- PATENT ABSTRACTS OF JAPAN vol. 1995, no. 10, 30 novembre 1995 (1995-11-30) -& JP 07 186263 A (TOYOTA MOTOR CORP), 25 juillet 1995 (1995-07-25)

## Description

L'invention concerne un procédé de piquage d'un corps tubulaire d'une valve de remplissage ou d'un capteur de pression sur un conduit de transfert de fluide d'un circuit de climatisation par exemple.

D'une manière générale, dans tout circuit de climatisation, des piquages sont effectués dans les conduits du circuit pour monter au moins une valve de remplissage utilisée pour remplir le circuit d'un fluide frigorigène approprié, et un capteur de pression utilisé pour transmettre des informations sur la pression du fluide frigorigène. La valve de remplissage ou le capteur de pression présente un corps tubulaire qu'il faut raccorder de manière étanche sur le conduit du circuit.

Jusqu'à maintenant, ce raccordement est effectué soit par brasage avec un métal d'apport lorsque le conduit est en aluminium ainsi que le corps de la valve de remplissage ou du capteur de pression, l'étanchéité étant normalement assurée par le brasage, soit par un mode de fixation de type mécanique plus complexe avec la présence d'au moins un joint rapporté assurant l'étanchéité.

Ces modes de raccordement sont délicats à mettre en oeuvre, notamment du fait de la nécessité d'obtenir l'étanchéité nécessaire.

Par contre, on connaît du document US-3,692,614 un mode de raccordement qui consiste en une opération dite de soudure-vibration sans métal d'apport, mais cette technique ne garantit pas nécessairement la formation d'un cordon de soudure homogène.

L'article Dreger D., R. : « Welding Plastics by Vibration", Machine design, Penton Media, Cleveland, OH, US, vol. 46, No. 31, 1974-12-26, page 42, présente le principe de la technique de soudure de matières plastiques par vibrations, notamment en la comparant à la soudure par ultrasons.

Le document JP-A-06 050490 présente un procédé de piquage à angle droit utilisant une soudure par vibrations pour fixer une embase en forme de portion de cylindre d'un corps tubulaire sur un conduit de transfert de fluide, dans lequel la face interne de cette embase est prévue lisse de sorte à épouser la surface cylindrique du conduit.

Le document US-A-5,125,431 présente un procédé de piquage à angle droit d'un corps tubulaire de support d'une valve de remplissage sur un conduit de transfert de fluide selon le préambule de la revendication 1 annexée à la présente description, et un système comprenant un tel conduit et un tel corps destiné à y être piqué selon le préambule de la revendication 7 également annexée. Ce document enseigne d'utiliser une soudure spécifiquement par ultrasons pour souder ce corps au conduit.

Un but de l'invention est de perfectionner cette technique dite de soudure-vibration pour obtenir la formation d'un cordon de soudure homogène entre un corps tubulaire et un conduit de transfert de fluide sur lequel le corps tubulaire est piqué.

A cet effet, l'invention propose un procédé de piquage d'un corps tubulaire de support d'un élément auxiliaire tel une valve de remplissage ou un capteur de pression par exemple sur un conduit de transfert de fluide rigide ou semi-rigide, le conduit présentant au moins une couche externe en matière plastique, le procédé consistant :
- à prévoir un embout en matière plastique à une extrémité du corps, l'embout se terminant par une embase en forme de portion de cylindre qui est à fixer au contact du conduit et qui s'étend à 90° par rapport à l'axe longitudinal du corps, lequel est traversé de part en part par un passage central, au moins un bourrelet étant formé en saillie au niveau de la surface interne de ladite embase, et
- à fixer cette embase de manière étanche sur le conduit par une opération de soudure sans métal d'apport,
caractérisé en ce que l'on conçoit l'embout de sorte que le bourrelet entoure ledit passage central en formant un bossage continu et soit entouré d'au moins une gorge, et en ce que l'on réalise cette opération qui est une soudure-vibration de sorte que ce bourrelet fonde en se répandant dans ladite au moins une gorge et crée un cordon de soudure homogène autour dudit passage central.

D'une manière générale, on peut ménager au moins une gorge autour du bourrelet pour créer un cordon de soudure homogène.

Avantageusement la matière plastique de l'embout du corps de support de l'élément auxiliaire est chargée d'une matière de renfort, des fibres textiles par exemple, sachant que l'embout et le conduit peuvent être réalisés à partir de la même matière plastique de base, en particulier une matière thermoplastique telle du PA 66 par exemple.

L'invention concerne également un système comprenant :
- un conduit de transfert de fluide rigide ou semi-rigide présentant au moins une couche externe en matière plastique, et
- au moins un corps tubulaire de support d'un élément auxiliaire tel une valve de remplissage ou un capteur de pression par exemple, ce corps étant destiné à être piqué sur le conduit et présentant à l'une de ses extrémités un embout en matière plastique se terminant par une embase en forme de portion de cylindre qui est destinée à être fixée de manière étanche sur le conduit par une opération de soudure sans métal d'apport et qui s'étend à 90° par rapport à l'axe longitudinal du corps, lequel est traversé de part en part par un passage central, au moins un bourrelet étant formé en saillie au niveau de la surface interne de ladite embase.

Ce système est tel que ce bourrelet entoure le passage central en formant un bossage continu et est entouré d'au moins une gorge, de telle sorte que ce bourrelet fonde lors de cette opération en se répandant dans ladite au moins une gorge et crée un cordon de soudure homogène autour dudit passage central.

La technique dite de soudure-vibration est une opération bien adaptée pour des applications soumises à de fortes contraintes de pression et de température d'une part, et pour des surfaces mises en contact l'une avec l'autre qui ne sont pas planes d'autre part.

L'expérience a montré également que cette technique de soudure-vibration sans apport de matière donnait une très bonne étanchéité et s'avérait avantageuse par rapport aux inconvénients résultant d'une opération de brasage avec apport de matière. En particulier, il n'y a pas lieu de procéder à un nettoyage consécutif à l'opération de brasage, il n'y a plus de risque de coulure du métal d'apport, il n'y a plus le risque d'une occultation partielle du brasage néfaste à l'étanchéité par suite des températures de ramollissement proches l'une de l'autre du métal d'apport et des surfaces métalliques de contact, et il n'y a pas de changement des propriétés mécaniques des surfaces en matière plastique au contact l'une de l'autre. Autrement dit, le procédé selon l'invention est un procédé propre et de mise en oeuvre facile.

D'autres avantages, caractéristiques et détails de l'invention ressortiront du complément de description qui va suivre en référence aux dessins annexés, donnés uniquement à titre d'exemple et dans lesquels :
- la figure 1 est une vue en perspective d'une portion de conduit d'un flexible de climatisation sur lequel est réalisé le piquage du corps tubulaire d'un support d'un élément auxiliaire tel un capteur de pression ;
- la figure 2 est une vue en perspective du corps tubulaire d'un autre support d'un élément auxiliaire tel une valve de remplissage; et
- la figure 3 est une vue en perspective éclatée d'une variante de réalisation de l'invention.

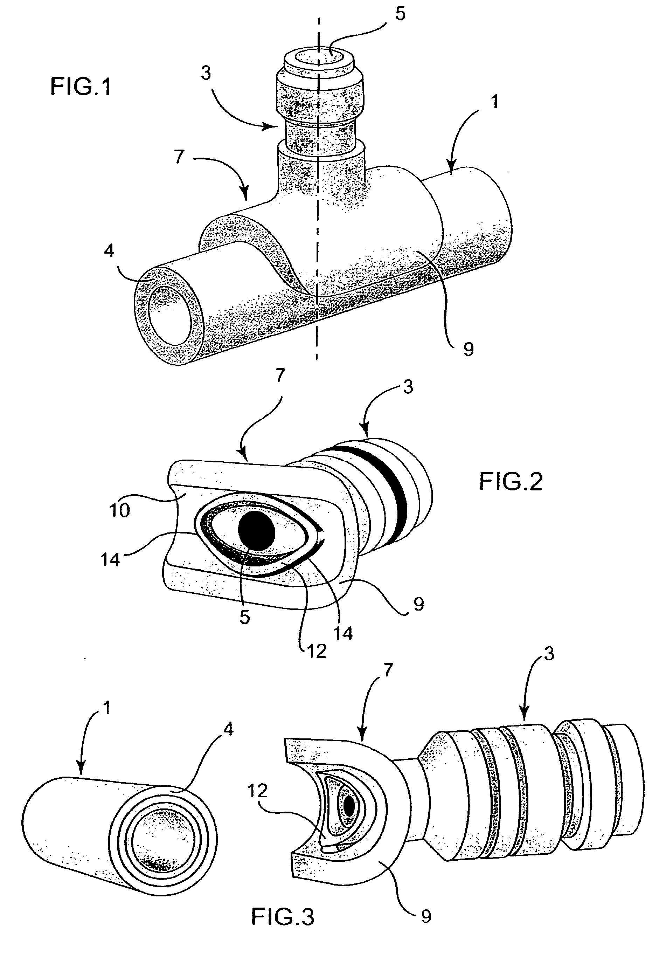

La portion de conduit illustrée à la figure 1 est celle d'un conduit 1 de transfert de fluide en général, ce conduit 1 pouvant constituer un tube rigide ou semi-rigide d'un flexible d'un circuit de climatisation d'un véhicule à moteur par exemple. Comme explicité en préambule, le conduit 1 est piqué par au moins le corps tubulaire 3 d'un support d'un élément auxiliaire tel qu'un capteur de pression qui transmet la pression du fluide frigorigène à l'unité de pilotage du circuit de climatisation, ou une valve de remplissage qui est utilisée pour injecter un fluide frigorigène, du fréon par exemple, dans le circuit de climatisation.

L'invention concerne notamment un procédé pour réaliser ce piquage qui est effectué selon une technique dite de soudure-vibration, comme cela va être explicité en référence à la figure 2, sachant que le conduit 1 est rigide ou semi-rigide à section droite circulaire et présente au moins une couche externe 4 réalisée en une matière plastique, en particulier une matière thermoplastique telle du PA 66 par exemple. Ainsi, le conduit 1 peut être un conduit monocouche en matière plastique ou un conduit multicouche dont la couche externe est en matière plastique.

Le corps 3 de l'élément auxiliaire est un élément tubulaire qui est traversé de part en part par un passage central 5, qui se termine à une extrémité par un embout 7 de raccordement sur le conduit 1. L'embout 7 peut former une embase 9 qui s'étend à 90° par rapport à l'axe longitudinal X-X du corps 3. L'embase 9 est par exemple une portion de cylindre dont la face interne 10 présente une forme complémentaire à celle du conduit 1 à section droite circulaire. La face interne 10 de l'embase 9 présente un bourrelet ou bossage 12 en saillie qui est continu et entoure le passage central 5 du corps 3. Au moins une gorge 14 entoure le bossage 12 intérieurement ou extérieurement, avec de préférence une gorge 14 de part et d'autre du bossage 12.

L'embout de raccordement 7 est également réalisé en une matière plastique qui peut être la même que celle utilisée pour réaliser la couche externe 4 du conduit 1, du PA 66 par exemple, mais cette matière plastique est avantageusement chargée avec des fibres de renfort, par exemple des fibres de verre ou des fibres textiles à raison de 30% en poids.

La technique dite de soudure-vibration, connue en soi, consiste à appliquer l'une contre l'autre les deux surfaces de contact des deux pièces à raccorder, et à soumettre au moins l'une des pièces à un mouvement de translation par rapport à l'autre pièce de manière à échauffer la matière plastique et à la faire fondre pour créer un cordon de soudure entre les deux pièces sans métal d'apport. En l'espèce, le bourrelet 12 de l'embout 7 va fondre en se répandant dans les gorges 14 et créer un cordon de soudure homogène autour du passage central 5 du corps tubulaire 3.

Ensuite, le corps tubulaire 3 étant ainsi piqué ou fixé de manière étanche sur la conduit 1, on perce le conduit 1 au travers du passage central 5 pour assurer une communication entre le corps tubulaire 3 et le conduit 1. Le perçage du conduit 1 est plutôt effectué après qu'avant la fixation du corps tubulaire 3 sur le conduit 1.

Selon un mode de fixation particulier de l'invention, le corps tubulaire 3 et son embout de raccordement 7 ne forment qu'une seule pièce en matière plastique obtenue par une opération de moulage par injection.

Dans la variante de réalisation illustrée à la figure 3, on a envisagé le piquage du corps tubulaire 3 d'un élément auxiliaire sur un conduit 1 multicouche dont la couche externe 4 est en matière plastique, le procédé de piquage restant le même.

Un conduit 1 ainsi piqué peut être notamment monté dans un circuit de climatisation d'un véhicule à moteur par exemple.

## Revendications

1. Procédé de piquage d'un corps tubulaire (3) de support d'un élément auxiliaire tel une valve de remplissage ou un capteur de pression par exemple sur un conduit (1) de transfert de fluide rigide ou semi-rigide, ledit conduit (1) présentant au moins une couche externe (4) en matière plastique, le procédé consistant :
- à prévoir un embout (7) en matière plastique à une extrémité dudit corps (3), cet embout se terminant par une embase (9) en forme de portion de cylindre qui est à fixer au contact du conduit et qui s'étend à 90° par rapport à l'axe longitudinal (X-X) du corps, lequel est traversé de part en part par un passage central (5), au moins un bourrelet (12) étant formé en saillie au niveau de la surface interne de ladite embase, et
- à fixer cette embase de manière étanche sur le conduit (1) par une opération de soudure sans métal d'apport,
**caractérisé en ce que** l'on conçoit l'embout (7) de sorte que le bourrelet (12) entoure ledit passage central (5) en formant un bossage continu et soit entouré d'au moins une gorge (14), et **en ce que** l'on réalise cette opération qui est une soudure-vibration de sorte que ce bourrelet fonde en se répandant dans ladite au moins une gorge et crée un cordon de soudure homogène autour dudit passage central.

2. Procédé selon la revendication 1, dans lequel on ménage deux dites gorges (14) de part et d'autre dudit bourrelet (12).

3. Procédé selon la revendication 1 ou 2, dans lequel on charge la matière plastique de l'embout (7) par une matière de renfort, des fibres de verre ou des fibres textiles par exemple.

4. Procédé selon l'une des revendications précédentes, dans lequel on réalise la couche externe (4) du conduit (1) et l'embout (7) à partir de la même matière plastique de base, en particulier une matière thermoplastique telle du PA 66 par exemple.

5. Procédé selon l'une des revendications précédentes, dans lequel le corps (3) et son embout (7) sont réalisés en une seule pièce de matière plastique obtenue par une opération de moulage par injection.

6. Procédé selon l'une des revendications précédentes, dans lequel, après la fixation du corps tubulaire (3) sur le conduit (1), on perce le conduit (1) au travers du corps tubulaire (3).

7. Système (1, 3) comprenant :
- un conduit (1) de transfert de fluide rigide ou semi-rigide présentant au moins une couche externe (4) en matière plastique, et
- au moins un corps tubulaire (3) de support d'un élément auxiliaire tel une valve de remplissage ou un capteur de pression par exemple, ce corps étant destiné à être piqué sur le conduit et présentant à l'une de ses extrémités un embout (7) en matière plastique se terminant par une embase (9) en forme de portion de cylindre qui est destinée à être fixée de manière étanche sur le conduit (1) par une opération de soudure-vibration sans métal d'apport et qui s'étend à 90° par rapport à l'axe longitudinal (X-X) du corps, lequel est traversé de part en part par un passage central (5), au moins un bourrelet (12) étant formé en saillie au niveau de la surface interne de ladite embase,
**caractérisé en ce que** ce bourrelet entoure ledit passage central (5) en formant un bossage continu et est entouré d'au moins une gorge (14), de telle sorte que ce bourrelet fonde lors de cette opération en se répandant dans ladite au moins une gorge et crée un cordon de soudure homogène autour dudit passage central.

8. Système (1, 3) selon la revendication 7, dans lequel deux dites gorges (14) sont formées de part et d'autre dudit bourrelet (12).

9. Système (1, 3) selon la revendication 7 ou 8, dans lequel la matière plastique de l'embout (7) est chargée par une matière de renfort, des fibres de verre ou des fibres textiles par exemple.

10. Système (1, 3) selon l'une des revendications 7 à 9, dans lequel la couche externe (4) du conduit (1) et l'embout (7) sont réalisés en une même matière plastique de base, en particulier du PA 66.

11. Circuit de climatisation pour véhicule à moteur, **caractérisé en ce qu'**il comprend au moins un système (1, 3) selon une des revendications 7 à 10 dans lequel ledit au moins un corps tubulaire (3) est le corps d'une valve de remplissage ou d'un capteur de pression par exemple.

## Claims

1. Method for branch connecting a tubular support body (3) for an auxiliary element such as, for example, a filling valve or a pressure sensor to a rigid or semi-rigid fluid transfer pipe (1), said pipe (1) having at least one outer layer (4) of plastics material, the method consisting in:
- providing a joining piece (7) of plastics material at one end of said body (3), the joining piece terminating in a foot (9) in the form of a portion of a cylinder which is to be fixed in contact with the pipe and which extends at 90° relative to the longitudinal axis (X-X) of the body, through which there passes from one side to the other, a central passage (5) at least one projecting bead (12) being formed in the region of the inside surface of said foot, and
- fixing the foot in a tight manner to the pipe (1) by an operation of welding without filler metal,
**characterised in that** the joining piece (7) is designed so that the bead (12) surrounds said central passage (5) to form a continuous boss and is surrounded by at least one groove (14), and **in that** this operation which is a vibration welding operation is carried out in such a manner that the bead melts and spreads in said at least one groove and creates a homogeneous weld seam around said central passage.

2. Method according to claim 1, in which two said grooves (14) are formed on either side of said bead (12).

3. Method according to claim 1 or 2, in which the plastics material of the joining piece (7) is charged with a reinforcing material, for example glass fibres or textile fibres.

4. Method according to any one of the preceding claims, in which the outer layer (4) of the pipe (1) and the joining piece (7) are made from the same base plastics material, in particular a thermoplastic material such as, for example, PA 66.

5. Method according to any one of the preceding claims, in which the body (3) and its joining piece (7) are produced in one piece of plastics material obtained by an injection moulding operation.

6. Method according to any one of the preceding claims, in which, after the tubular body (3) has been fixed to the pipe (1), the pipe (1) is pierced through the tubular body (3).

7. System (1, 3) comprising:
- a rigid or semi-rigid fluid transfer pipe (1) having at least one outer layer (4) of plastics material, and
- at least one tubular support body (3) for an auxiliary element such as, for example, a filling valve or a pressure sensor, which body is to be connected to the pipe and has at one of its ends a joining piece (7) of plastics material terminating in a foot (9) in the form of a portion of a cylinder which is to be fixed in a tight manner to the pipe (1) by an operation of vibration welding without filler metal and which extends at 90° relative to the longitudinal axis (X-X) of the body, through which there passes from one side to the other a central passage (5), at least one projecting bead (12) being formed in the region of the inside surface of said foot,
**characterised in that** the bead surrounds said central passage (5) forming a continuous boss and is surrounded by at least one groove (14), so that the bead melts during the operation and spreads in said at least one groove and creates a homogeneous weld seam around said central passage.

8. System (1, 3) according to claim 7, in which two said grooves (14) are formed on either side of said bead (12).

9. System (1, 3) according to claim 7 or 8, in which the plastics material of the joining piece (7) is charged with a reinforcing material, for example glass fibres or textile fibres.

10. System (1, 3) according to any one of claims 7 to 9, in which the outer layer (4) of the pipe (1) and the joining piece (7) are made of the same base plastics material, in particular PA 66.

11. Air-conditioning circuit for a motor vehicle, **characterised in that** it comprises at least one system (1, 3) according to any one of claims 7 to 10 in which said at least one tubular body (3) is the body of, for example, a filling valve or of a pressure sensor.

## Patentansprüche

1. Verfahren zum Anheften eines röhrenförmigen Körpers (3) zum Halten eines Hilfselements, wie zum Beispiel ein Füllventil oder ein Drucksensor, beispielsweise an einer starren oder halbstarren Leitung (1) zum Fluidtransfer, wobei die Leitung (1) wenigstens eine äußere Schicht (4) aus einem Kunststoffmaterial aufweist, wobei das Verfahren darin besteht:
- ein Ansatzstück (7) aus Kunststoffmaterial an einem Ende des Körpers (3) vorzusehen, wobei dieses Ansatzstück in einem Sockel (9) in Form eines Zylinderabschnitts endet, welcher in Kontakt mit der Leitung zu befestigen ist und welcher sich mit 90° bezüglich der longitudinalen Achse (X-X) des Körpers erstreckt, welcher von der einen Seite zu der anderen Seite von einer zentralen Passage (5) durchdrungen ist, wobei wenigstens ein Wulst (12) vom Niveau der Innenfläche des Sockels hervorstehend ausgebildet ist, und
- diesen Sockel auf abdichtende Weise durch einen Schweißvorgang ohne Metallzufuhr an der Leitung (1) zu befestigen, **dadurch gekennzeichnet, dass** das Ansatzstück (7) derart ausgestaltet ist, dass der Wulst (12) die zentrale Passage (5) umgibt, wobei ein durchgängiger Buckel gebildet wird, und von wenigstens einer Kehle (14) umgeben ist, und dass dieser Vorgang, welcher ein Vibrationsschweißen ist, derart realisiert wird, dass dieser Wulst schmilzt, wobei er sich in der wenigstens einen Kehle ausbreitet und eine homogene Schweißnaht um die zentrale Passage herum erzeugt.

2. Verfahren nach Anspruch 1, wobei wenigstens zwei der genannten Kehlen (14) auf beiden Seiten des Wulstes (12) bereitgestellt sind.

3. Verfahren nach Anspruch 1 oder 2, wobei das Kunststoffmaterial des Ansatzstücks (7) mit einem Verstärkungsmaterial versehen ist, zum Beispiel mit Glasfasern oder Textilfasern.

4. Verfahren nach einem der vorhergehenden Ansprüche, wobei die äußere Schicht (4) der Leitung (1) und das Ansatzstück (7) ausgehend von demselben Grundkunststoffmaterial realisiert sind, insbesondere einem thermoplastischen Material wie zum Beispiel PA 66.

5. Verfahren nach einem der vorhergehenden Ansprüche, wobei der Körper (3) und sein Ansatzstück (7) aus einem einzigen Stück Kunststoffmaterial realisiert sind, welches durch einen Spritzformungsvorgang erhalten ist.

6. Verfahren nach einem der vorhergehenden Ansprüche, wobei nach der Befestigung des röhrenförmigen Körpers (3) an der Leitung (1) die Leitung (1) in Richtung des röhrenförmigen Körpers (3) durchbrochen wird.

7. System (1, 3) umfassend:
- eine starre oder halbstarre Leitung (1) zum Fluidtransfer, welche wenigstens eine äußere Schicht (4) aus einem Kunststoffmaterial aufweist, und
- wenigstens einen röhrenförmigen Körper (3) zur Halterung eines Hilfselements, wie zum Beispiel ein Füllventil oder ein Drucksensor, wobei der Körper dazu bestimmt ist, an der Leitung angeheftet zu werden und an einem seiner Enden ein Ansatzstück (7) aus Kunststoffmaterial aufweist, welches in einem Sockel (9) in Form eines Zylinderabschnitts endet, welcher dazu bestimmt ist, auf abdichtende Weise durch einen Vibrationsschweißvorgang ohne Metallzufuhr an der Leitung (1) befestigt zu werden, und welcher sich mit 90° bezüglich der longitudinalen Achse (X-X) des Körpers erstreckt, welcher von einer Seite zur anderen von einer zentralen Passage (5) durchdrungen ist, wobei wenigstens ein Wulst (12) vom Niveau der Innenfläche des Sockels hervorstehend ausgebildet ist, **dadurch gekennzeichnet, dass** der Wulst die zentrale Passage (5) umgibt, wobei ein kontinuierlicher Buckel gebildet wird, und von wenigstens einer Kehle (14) umgeben ist, so dass der Wulst bei diesem Vorgang schmilzt und sich in der wenigstens einen Kehle ausbreitet und eine homogene Schweißnaht um die zentrale Passage herum erzeugt.

8. System (1, 3) nach Anspruch 7, wobei zwei der genannten Kehlen (14) auf beiden Seiten des Wulstes (12) ausgebildet sind.

9. System (1, 3) nach Anspruch 7 oder 8, wobei das Kunststoffmaterial des Ansatzstücks (7) mit einem Verstärkungsmaterial versehen ist, zum Beispiel mit Glasfasern oder Textilfasern.

10. System (1, 3) nach einem der Ansprüche 7-9, wobei die äußere Schicht (4) der Leitung (1) und das Ansatzstück (7) aus einem gleichen Grundkunststoffmaterial realisiert sind, insbesondere aus PA 66.

11. Klimatisierungskreislauf für ein Kraftfahrzeug, **dadurch gekennzeichnet, dass** er wenigstens ein System (1, 3) nach einem der Ansprüche 7-10 umfasst, bei welchem der wenigstens eine röhrenförmige Körper (3) beispielsweise der Körper eines Füllventils oder eines Drucksensors ist.
